(19) Europäisches Patentamt
European Patent Office
Office européen des brevets

(11) **EP 4 633 264 A1**

(12) **EUROPEAN PATENT APPLICATION**
published in accordance with Art. 153(4) EPC

(43) Date of publication:
**15.10.2025 Bulletin 2025/42**

(21) Application number: **23910509.1**

(22) Date of filing: **25.12.2023**

(51) International Patent Classification (IPC):
**H04W 72/044** (2023.01)

(52) Cooperative Patent Classification (CPC):
**H04B 7/08; H04W 72/044; H04W 72/231**

(86) International application number:
**PCT/CN2023/141580**

(87) International publication number:
**WO 2024/140583 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 CN 202211731367**

(71) Applicant: **Huawei Technologies Co., Ltd.
Shenzhen, Guangdong 518129 (CN)**

(72) Inventors:
• **WU, Yuandong**
  **Shenzhen, Guangdong 518129 (CN)**
• **GAO, Xinyu**
  **Shenzhen, Guangdong 518129 (CN)**
• **LIU, Kunpeng**
  **Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57) Embodiments of this application provide a communication method and apparatus, may resolve a problem that an SINR of an equivalent channel cannot be maximized, and may be applied to an IRS system. The method includes: A first network device sends first indication information and time-frequency resources of N downlink reference signals to a second network device, and sends second indication information, the time-frequency resources of the N downlink reference signals, and the N downlink reference signals to a terminal device, so that the first network device receives phase reporting information from the terminal device, and sends phase indication information to the second network device, where the phase indication information is determined based on the phase reporting information.

FIG. 4

## Description

This application claims priority to Chinese Patent Application No. 202211731367.1, filed with the China National Intellectual Property Administration on December 30, 2022 and entitled "COMMUNICATION METHOD AND APPARATUS", which is incorporated herein by reference in its entirety.

## TECHNICAL FIELD

Embodiments of this application relate to the communication field, and in particular, to a communication method and apparatus.

## BACKGROUND

In a process in which a network device provides a service for a terminal device, if there is a coverage hole such as an indoor area or a street corner in a coverage area of the network device, the terminal device cannot obtain stable network performance in the coverage hole. Therefore, an intelligent reflecting surface (intelligent reflecting surface, IRS) may be deployed between the network device and the terminal device to perform directional reflection on a signal sent by the network device, to assist in communication between the network device and the terminal device.

In an IRS-assisted communication process, an equivalent channel between the network device and the terminal device includes a direct transmission channel between the network device and the terminal device, a channel between the network device and the IRS, and a channel between the IRS and the terminal device. The channel between the network device and the IRS and the channel between the IRS and the terminal device form a reflection channel. However, currently, when the IRS reflects a signal, a signal to interference plus noise ratio (signal to interference plus noise ratio, SINR) of the equivalent channel cannot be maximized.

## SUMMARY

Embodiments of this application provide a communication method and apparatus, and may resolve a problem that an SINR of an equivalent channel cannot be maximized.

To achieve the foregoing objective, this application uses the following technical solutions.

According to a first aspect, a communication method is provided. The method may be performed by a first network device, may be performed by a component of the first network device, for example, a processor, a chip, or a chip system of the first network device, or may be implemented by a logical module or software that can implement all or some functions of the first network device. The following uses an example in which the method is performed by the first network device for description. The communication method includes: The first network device sends first indication information and time-frequency resources of N downlink reference signals to a second network device. The first indication information indicates one first beam weight corresponding to the second network device on a time-frequency resource of each of the N downlink reference signals. There are N first beam weights in total, at least two of the first beam weights are different, and N is a positive integer greater than 1. The first network device sends second indication information and the time-frequency resources of the N downlink reference signals to a terminal device. The second indication information indicates one first phase corresponding to the terminal device on the time-frequency resource of each of the N downlink reference signals. There are N first phases in total, and at least two of the first phases are different. The first network device sends the N downlink reference signals to the terminal device. The first network device receives phase reporting information from the terminal device. The first network device sends phase indication information to the second network device, where the phase indication information is determined based on the phase reporting information.

Based on the communication method according to the first aspect, the first network device adjusts, by using the first indication information and the time-frequency resource of the downlink reference signal, a beam weight used when the second network device reflects the corresponding downlink reference signal, and sends the second indication information and the time-frequency resource of the downlink reference signal to the terminal device, to indicate a phase of the beam weight used for reflecting the corresponding downlink reference signal, so that the terminal device can determine, based on the second indication information, time-frequency resources of at least two downlink reference signals, and the at least two downlink reference signals, phase reporting information indicating a phase difference between a signal passing through a direct transmission channel and a signal passing through a reflection channel, and send the phase reporting information to the first network device. In this way, the first network device can indicate, based on the phase reporting information, the second network device to adjust the beam weight used for reflection, that is, perform phase compensation on the signal passing through the reflection channel by using the phase difference between the signal passing through the direct transmission channel and the signal passing through the reflection channel, so that the signal passing through the direct transmission channel and the signal passing through the reflection channel can be superposed in phase, to improve an SINR of a signal received by the terminal device.

In a possible design solution, the phase reporting information may be determined based on at least two of the N downlink reference signals. In other words, the first network device may change only beam weights used by the second network device to reflect the downlink reference signals twice, so that the terminal device can determine, based on the two downlink reference signals, the phase difference between the signal passing through the direct transmission channel and the signal passing through the reflection channel, to implement phase compensation, so as to improve the SINR of the signal received by the terminal device.

In a possible design solution, the time-frequency resource of each of the N downlink reference signals includes M frequency units, the phase reporting information includes K pieces of phase information respectively corresponding to K frequency units in the M frequency units, K and M are positive integers, and $1 \leq K \leq M$.

In a possible design solution, the communication method provided in this embodiment of this application may further include: The first network device sends third indication information to the terminal device. The third indication information indicates an association relationship between the K pieces of phase information included in the phase reporting information and the K frequency units of the downlink reference signal. In this design solution, the first network device delivers the third indication information to the terminal device, so that the terminal device reports the phase reporting information based on a requirement of the first network device. This can enhance an implementation capability on the first network device side.

In a possible design solution, the communication method provided in this embodiment of this application may further include: The first network device receives fourth indication information from the terminal device. The fourth indication information indicates an association relationship between the K pieces of phase information included in the phase reporting information and the K frequency units of the downlink reference signal. In this design solution, the first network device may process the phase reporting information with reference to the fourth indication information sent by the terminal device, to obtain the phase indication information.

In a possible design solution, the association relationship between the K pieces of phase information included in the phase reporting information and the K frequency units of the downlink reference signal is indicated by using an L-bit bitmap, where L is a positive integer, and $L \geq M$. In this way, an amount of feedback on the association relationship between the frequency unit and the phase reporting information can be reduced by using the L-bit bitmap.

In a possible design solution, at least one of phase differences between any two of the N first phases is greater than or equal to a first preset value. In this embodiment of this application, a larger phase difference between the first phases indicates a larger diversity gain of different received downlink reference signals, so that the phase reporting information determined by the terminal device is more accurate.

In a possible design solution, a time domain position interval between any two downlink reference signals is less than or equal to a first interval, and the first interval is determined based on channel coherence time between the first network device and the terminal device. The channel coherence time represents a maximum time difference in a case that an equivalent channel between the first network device and the terminal device remains constant or is basically unchanged. Therefore, to avoid a large difference between the received downlink reference signals caused by a channel state change, the time domain position interval between any two downlink reference signals should be less than or equal to the first interval determined based on the channel coherence time.

According to a second aspect, a communication method is provided. The method may be performed by a terminal device, may be performed by a component of the terminal device, for example, a processor, a chip, or a chip system of the terminal device, or may be implemented by a logical module or software that can implement all or some functions of the terminal device. The following uses an example in which the method is performed by the terminal device for description. The communication method includes: The terminal device receives second indication information and time-frequency resources of N downlink reference signals from a first network device. The second indication information indicates one first phase corresponding to the terminal device on a time-frequency resource of each of the N downlink reference signals. There are N first phases in total, at least two of the first phases are different, and N is a positive integer greater than 1. The terminal device receives the N downlink reference signals from the first network device. The terminal device determines phase reporting information based on the second indication information and the N downlink reference signals. The terminal device sends the phase reporting information to the first network device.

In a possible design solution, the phase reporting information may be determined based on at least two of the N downlink reference signals.

In a possible design solution, the time-frequency resource of each of the N downlink reference signals includes M frequency units, the phase reporting information includes K pieces of phase information respectively corresponding to K frequency units in the M frequency units, K and M are positive integers, and $1 \leq K \leq M$.

In a possible design solution, the communication method provided in this embodiment of this application may further include: The terminal device receives third indication information from the first network device. The third indication information indicates an association relationship between the K pieces of phase information included in the phase reporting information and the K frequency units of the downlink reference signal.

In a possible design solution, the communication method provided in this embodiment of this application may further include: The terminal device sends fourth indication information to the first network device. The fourth indication information indicates an association relationship between the K pieces of phase information included in the phase reporting information and the K frequency units of the downlink reference signal.

In a possible design solution, the association relationship between the K pieces of phase information included in the phase reporting information and the K frequency units of the downlink reference signal is indicated by using an L-bit bitmap, where L is a positive integer, and $L \geq M$.

In a possible design solution, at least one of phase differences between any two of the N first phases is greater than or equal to a first preset value.

In a possible design solution, a time domain position interval between any two downlink reference signals is less than or equal to a first interval, and the first interval is determined based on channel coherence time between the first network device and the terminal device.

For technical effects of the communication method according to the second aspect, refer to the technical effects of the communication method according to the first aspect. Details are not described herein again.

According to a third aspect, a communication method is provided. The method may be performed by a second network device, may be performed by a component of the second network device, for example, a processor, a chip, or a chip system of the second network device, or may be implemented by a logical module or software that can implement all or some functions of the second network device. The following uses an example in which the method is performed by the second network device for description. The communication method includes: The second network device receives first indication information and time-frequency resources of N downlink reference signals from a first network device. The first indication information indicates one first beam weight corresponding to the second network device on a time-frequency resource of each of the N downlink reference signals. There are N first beam weights in total, at least two of the first beam weights are different, and N is a positive integer greater than 1. The second network device receives phase indication information from the first network device, where the phase indication information is related to the N first beam weights.

For technical effects of the communication method according to the third aspect, refer to the technical effects of the communication method according to the first aspect. Details are not described herein again.

According to a fourth aspect, a communication apparatus is provided, configured to implement the foregoing methods. The communication apparatus may be the first network device in the first aspect, an apparatus including the first network device, or an apparatus included in the first network device, for example, a chip. The communication apparatus includes a corresponding module, unit, or means (means) for implementing the method according to the first aspect. The module, unit, or means may be implemented by hardware, software, or hardware executing corresponding software. The hardware or software includes one or more modules or units corresponding to the foregoing functions.

In some possible designs, the communication apparatus includes a sending module and a receiving module. The sending module is configured to send first indication information and time-frequency resources of N downlink reference signals to a second network device. The first indication information indicates one first beam weight corresponding to the second network device on a time-frequency resource of each of the N downlink reference signals. There are N first beam weights in total, at least two of the first beam weights are different, and N is a positive integer greater than 1. The sending module is further configured to send second indication information and the time-frequency resources of the N downlink reference signals to a terminal device. The second indication information indicates one first phase corresponding to the terminal device on the time-frequency resource of each of the N downlink reference signals. There are N first phases in total, and at least two of the first phases are different. The sending module is further configured to send the N downlink reference signals to the terminal device. The receiving module is configured to receive phase reporting information from the terminal device. The sending module is further configured to send phase indication information to the second network device, where the phase indication information is determined based on the phase reporting information.

In a possible design solution, the phase reporting information may be determined based on at least two of the N downlink reference signals.

In a possible design solution, the time-frequency resource of each of the N downlink reference signals includes M frequency units, the phase reporting information includes K pieces of phase information respectively corresponding to K frequency units in the M frequency units, K and M are positive integers, and $1 \leq K \leq M$.

In a possible design solution, the sending module is further configured to send third indication information to the terminal device. The third indication information indicates an association relationship between the K pieces of phase information included in the phase reporting information and the K frequency units of the downlink reference signal.

In a possible design solution, the receiving module is configured to receive fourth indication information from the terminal device. The fourth indication information indicates an association relationship between the K pieces of phase information included in the phase reporting information and the K frequency units of the downlink reference signal.

In a possible design solution, the association relationship between the K pieces of phase information included in the phase reporting information and the K frequency units of the downlink reference signal is indicated by using an L-bit bitmap, where L is a positive integer, and $L \geq M$.

In a possible design solution, at least one of phase differences between any two of the N first phases is greater than or equal to a first preset value.

In a possible design solution, a time domain position interval between any two downlink reference signals is less than or equal to a first interval, and the first interval is determined based on channel coherence time between the first network device and the terminal device.

In a possible design solution, the sending module and the receiving module may alternatively be integrated into one module, for example, a transceiver module. The transceiver module is configured to implement a sending function and a receiving function of the communication apparatus according to the fourth aspect.

In a possible design solution, the communication apparatus according to the fourth aspect may further include a processing module. The processing module is configured to implement a processing function of the communication apparatus according to the fourth aspect.

In a possible design solution, the communication apparatus according to the fourth aspect may further include a storage module, and the storage module stores a program or instructions. When the processing module executes the program or the instructions, the communication apparatus is enabled to perform the communication method according to the first aspect.

For technical effects of the communication apparatus according to the fourth aspect, refer to the technical effects of the communication method according to the first aspect. Details are not described herein again.

According to a fifth aspect, a communication apparatus is provided, configured to implement the foregoing methods. The communication apparatus may be the terminal device in the second aspect, an apparatus including the terminal device, or an apparatus included in the terminal device, for example, a chip. The communication apparatus includes a corresponding module, unit, or means (means) for implementing the method according to the second aspect. The module, unit, or means may be implemented by hardware, software, or hardware executing corresponding software. The hardware or software includes one or more modules or units corresponding to the foregoing functions.

In some possible designs, the communication apparatus includes a processing module and a transceiver module. The transceiver module is configured to receive second indication information and time-frequency resources of N downlink reference signals from a first network device. The second indication information indicates one first phase corresponding to the terminal device on a time-frequency resource of each of the N downlink reference signals. There are N first phases in total, at least two of the first phases are different, and N is a positive integer greater than 1. The transceiver module is further configured to receive the N downlink reference signals from the first network device. The processing module is configured to determine phase reporting information based on the second indication information and the N downlink reference signals. The transceiver module is further configured to send the phase reporting information to the first network device.

In a possible design solution, the phase reporting information may be determined based on at least two of the N downlink reference signals.

In a possible design solution, the time-frequency resource of each of the N downlink reference signals includes M frequency units, the phase reporting information includes K pieces of phase information respectively corresponding to K frequency units in the M frequency units, K and M are positive integers, and $1 \leq K \leq M$.

In a possible design solution, the transceiver module is further configured to receive third indication information from the first network device. The third indication information indicates an association relationship between the K pieces of phase information included in the phase reporting information and the K frequency units of the downlink reference signal.

In a possible design solution, the transceiver module is further configured to send fourth indication information to the first network device. The fourth indication information indicates an association relationship between the K pieces of phase information included in the phase reporting information and the K frequency units of the downlink reference signal.

In a possible design solution, the association relationship between the K pieces of phase information included in the phase reporting information and the K frequency units of the downlink reference signal is indicated by using an L-bit bitmap, where L is a positive integer, and $L \geq M$.

In a possible design solution, at least one of phase differences between any two of the N first phases is greater than or equal to a first preset value.

In a possible design solution, a time domain position interval between any two downlink reference signals is less than or equal to a first interval, and the first interval is determined based on channel coherence time between the first network device and the terminal device.

In a possible design solution, the transceiver module may include a receiving module and a sending module. The sending module is configured to implement a sending function of the communication apparatus according to the fifth aspect, and the receiving module is configured to implement a receiving function of the communication apparatus according to the fifth aspect.

In a possible design solution, the communication apparatus according to the fifth aspect may further include a storage module, and the storage module stores a program or instructions. When the processing module executes the program or the instructions, the communication apparatus according to the fifth aspect is enabled to perform the communication method according to the second aspect.

For technical effects of the communication apparatus according to the fifth aspect, refer to the technical effects of the communication method according to the second aspect. Details are not described herein again.

According to a sixth aspect, a communication apparatus is provided, configured to implement the foregoing methods. The communication apparatus may be the second network device in the third aspect, an apparatus including the second network device, or an apparatus included in the second network device, for example, a chip. The communication apparatus includes a corresponding module, unit, or means (means) for implementing the method according to the third aspect. The module, unit, or means may be implemented by hardware, software, or hardware executing corresponding software. The hardware or software includes one or more modules or units corresponding to the foregoing functions.

In some possible designs, the communication apparatus includes a receiving module. The receiving module is configured to receive first indication information and time-frequency resources of N downlink reference signals from a first network device. The first indication information indicates one first beam weight corresponding to the second network device on a time-frequency resource of each of the N downlink reference signals. There are N first beam weights in total, at least two of the first beam weights are different, and N is a positive integer greater than 1. The receiving module is further configured to receive phase indication information from the first network device, where the phase indication information is related to the N first beam weights.

In a possible design solution, the communication apparatus according to the sixth aspect may further include a sending module. The sending module is configured to implement a sending function of the communication apparatus according to the sixth aspect.

In a possible design solution, the sending module and the receiving module may alternatively be integrated into one module, for example, a transceiver module. The transceiver module is configured to implement a sending function and a receiving function of the communication apparatus according to the sixth aspect.

In a possible design solution, the communication apparatus according to the sixth aspect may further include a processing module. The processing module is configured to implement a processing function of the communication apparatus according to the sixth aspect.

In a possible design solution, the communication apparatus according to the sixth aspect may further include a storage module, and the storage module stores a program or instructions. When the processing module executes the program or the instructions, the communication apparatus is enabled to perform the communication method according to the third aspect.

For technical effects of the communication apparatus according to the sixth aspect, refer to the technical effects of the communication method according to the first aspect. Details are not described herein again.

According to a seventh aspect, a communication apparatus is provided. The communication apparatus includes a processor, where the processor is coupled to a memory, and the processor is configured to execute a computer program stored in the memory, to enable the communication apparatus to perform the method according to any one of the possible implementations of the first aspect to the third aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

According to an eighth aspect, a communication apparatus is provided, including a processor and a communication interface. The communication interface is configured to communicate with a module other than the communication apparatus. The processor is configured to execute a computer program or instructions, to enable the communication apparatus to perform the method according to any one of the first aspect to the third aspect.

According to a ninth aspect, a communication apparatus is provided, including at least one processor. The processor is configured to execute a computer program or instructions stored in a memory, to enable the communication apparatus to perform the method according to any one of the first aspect to the third aspect.

According to a tenth aspect, a communication apparatus is provided (for example, the communication apparatus may be a chip or a chip system). The communication apparatus includes a processor, configured to implement functions in any one of the first aspect to the third aspect.

In some possible designs, the communication apparatus includes a memory, and the memory is configured to store necessary program instructions and/or data.

Optionally, the processor and the memory may be integrated together.

In some possible designs, when the apparatus is a chip system, the apparatus may include a chip, or may include a chip and another discrete component.

According to an eleventh aspect, a communication apparatus is provided, including a transceiver and a processor. The transceiver is configured to exchange information between the communication apparatus and another communication apparatus, and the processor executes program instructions to perform the method according to any one of the first aspect to the third aspect.

In a possible design solution, the communication apparatus according to the eleventh aspect may further include a memory. The memory and the processor may be integrated together, or may be separately disposed. The memory may be configured to store a computer program and/or data in the method according to any one of the first aspect to the third aspect.

According to a twelfth aspect, a communication apparatus is provided. The communication apparatus is configured to perform the method according to any one of the implementations of the first aspect to the third aspect.

In embodiments of this application, communication apparatuses according to the seventh aspect to the twelfth aspect may be the first network device in the first aspect, the terminal device in the second aspect, or the second network device in the third aspect, or a chip (system) or another part or component that may be disposed in the first network device, the terminal device, or the second network device, or an apparatus including the first network device, the terminal device, or the second network device.

According to a thirteenth aspect, a communication system is provided. The communication system includes the first network device in the first aspect, the terminal device in the second aspect, and the second network device in the third aspect.

According to a fourteenth aspect, a computer-readable storage medium is provided. The computer-readable storage medium stores a computer program or instructions. When the computer program or the instructions are run on a computer, the computer is enabled to perform the method according to any one of the possible implementations of the first aspect to the third aspect.

According to a fifteenth aspect, a computer program product is provided. The computer program product includes a computer program or instructions. When the computer program or the instructions are run on a computer, the computer is enabled to perform the method according to any one of the possible implementations of the first aspect to the third aspect.

## BRIEF DESCRIPTION OF DRAWINGS

FIG. 1 is a diagram of an architecture of an IRS-assisted wireless communication system according to an embodiment of this application;

FIG. 2 is a diagram of a structure of invert-phase superposition of a signal passing through a direct transmission channel and a signal passing through a reflection channel according to an embodiment of this application;

FIG. 3 is a diagram of an architecture of a communication system according to an embodiment of this application;

FIG. 4 is a schematic flowchart of a communication method according to an embodiment of this application;

FIG. 5 is a diagram of a structure of a time domain position interval between two downlink reference signals according to an embodiment of this application;

FIG. 6 is a diagram of a structure of a communication apparatus according to an embodiment of this application;

FIG. 7 is a diagram of a structure of another communication apparatus according to an embodiment of this application;

FIG. 8 is a diagram of a structure of still another communication apparatus according to an embodiment of this application; and

FIG. 9 is a diagram of a structure of still another communication apparatus according to an embodiment of this application.

## DESCRIPTION OF EMBODIMENTS

To better understand embodiments of this application, the following several items are described before embodiments of this application.

First, in this application, "indicating" may include "directly indicating" and "indirectly indicating". When a piece of "indication information" is described as indicating A, the indication information may directly indicate A or indirectly indicate A, but it does not indicate that the indication information definitely carries A.

Information indicated by indication information is referred to as to-be-indicated information. During specific implementation, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of various pieces of information that is pre-agreed on (for example, stipulated in a protocol), to reduce indication overheads to some extent. In addition, a common part of various pieces of information may be further identified and indicated in a unified manner, to reduce indication overheads caused by separately indicating same information.

In addition, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. The configuration information may include, for example, but not limited to one or a combination of at least two of radio resource control (radio resource control, RRC) signaling, medium access control (medium access control, MAC) layer signaling, and physical layer signaling. The MAC layer signaling includes, for example, a MAC control element (control element, CE). The physical (physical, PHY) layer signaling includes, for example, downlink control information (downlink control information, DCI).

Second, "first", "second", and various numeric numbers in the following embodiments are merely used for differentiation for ease of description, and are not intended to limit the scope of embodiments of this application, for example, for distinguishing between different indication information. For another example, a first network area and a second network area are merely intended to distinguish between different areas, and are not intended to limit a sequence thereof. A person skilled in the art may understand that the terms such as "first" and "second" do not limit a quantity or an execution sequence, and the terms such as "first" and "second" do not indicate a definite difference.

Third, "predefinition" or "preconfiguration" may be implemented by pre-storing corresponding code or a corresponding table in a device (for example, including a terminal device or a network device) or in another manner that can indicate related information. A specific implementation of "predefinition" or "preconfiguration" is not limited in this application. "Storing" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, a "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Fifth, in embodiments of this application, "information (information)", "signal (signal)", "message (message)", "channel (channel)", and "signaling (signaling)" may be interchangeably used sometimes. It should be noted that meanings expressed by the terms are consistent when differences between the terms are not emphasized. "Of (of)", "corresponding, relevant (corresponding, relevant)", and "corresponding (corresponding)" may be interchangeably used sometimes. It should be noted that meanings expressed by the terms are consistent when differences between the terms are not emphasized.

Sixth, the technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a $4^{th}$ generation ($4^{th}$ generation, 4G) mobile communication system, for example, a long term evolution (long term evolution, LTE) system or a worldwide interoperability for microwave access (worldwide interoperability for microwave access, WiMAX) communication system, a 5G mobile communication system, for example, a new radio (new radio, NR) system, and a future communication system, for example, a 6G mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, sometimes a subscript, for example, $W_1$, may be written incorrectly in a non-subscript form, for example, W1. Expressed meanings are consistent when differences are not emphasized.

Finally, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

The following describes the technical solutions in this application with reference to the accompanying drawings.

As described in the background, to resolve a problem that a terminal device cannot obtain a stable signal due to a coverage hole of a network device, coverage on the coverage hole may be enhanced by increasing transmit power of the network device, adding a small cell, or the like. However, operation costs and a quantity of devices in this manner are increased. Therefore, currently, deploying an IRS in the coverage hole to directionally reflect a signal sent by the network device to increase a network coverage area is a low-cost and highly-feasible solution.

The IRS is a large-scale antenna array including a large quantity of reconfigurable passive elements. Each element can independently cause a specific phase shift of an incident signal, to cooperatively change propagation of a reflected signal. In comparison with an amplify-and-forward (amplify-and-forward, AF) relay that assists in source-destination transmission by amplifying and regenerating a signal, the IRS does not use a transmit module, and only reflects a received signal by using a passive array, and therefore consumes no transmit power. In addition, the IRS is mainly configured to improve performance of an existing communication link, instead of transferring information about the IRS through reflection. A direct path signal in backscatter communication is an interference signal, and usually needs to be suppressed or eliminated on a receiver. However, in an IRS enhanced communication process, both a direct path signal and a reflection path signal carry same useful information, and therefore may be coherently superposed on a receiver, to maximize total receive power.

As a passive full-duplex component, the IRS not only has extremely low energy consumption, but also has extremely high spectrum efficiency in a full-duplex mode. In addition, there is no self-interference, and no information interference occurs in a reflection process. Because information processing does not need to be performed when the IRS performs receiving or transmission, transmission efficiency can be improved. In comparison with another active intelligent surface, the IRS has advantages such as low costs, low power consumption, and flexible mounting, and has important research significance for future application in fields such as emergency communication and military communication.

In comparison with a conventional communication manner, using the IRS for communication has the following advantages: In comparison with a conventional relay, the IRS does not use a transmitter module, and only reflects a received signal by using a passive array, and therefore causes no additional power consumption. In addition, an active relay usually runs in a half-duplex mode, and therefore spectrum efficiency of the active relay is lower than that of the IRS running in the full-duplex mode. Although the active relay may also run in the full-duplex mode in some implementations, the active relay causes severe self-interference, and a complex interference cancellation technology needs to be used for processing. Different from conventional backscatter communication in which communication with a receiver is performed by reflecting a signal sent by a reader, the IRS is configured to enhance performance of an existing communication link without transferring any information about the IRS through reflection. Therefore, no additional interference is introduced when communication is performed by using the IRS. In IRS enhanced communication, both a direct path signal and a reflection path signal carry same useful information, and may be added and superposed on a receiver, to maximize total receive power.

Currently, research on an IRS-assisted wireless communication system in the field of wireless communication technologies is at an initial stage. A core of the IRS-assisted wireless communication system is to cover a ground surface, a building, an uncrewed aerial vehicle, and the like by using an IRS having a reconfigurable reflection characteristic, and maximize a received signal gain by adjusting a reflection method, so as to reduce interference.

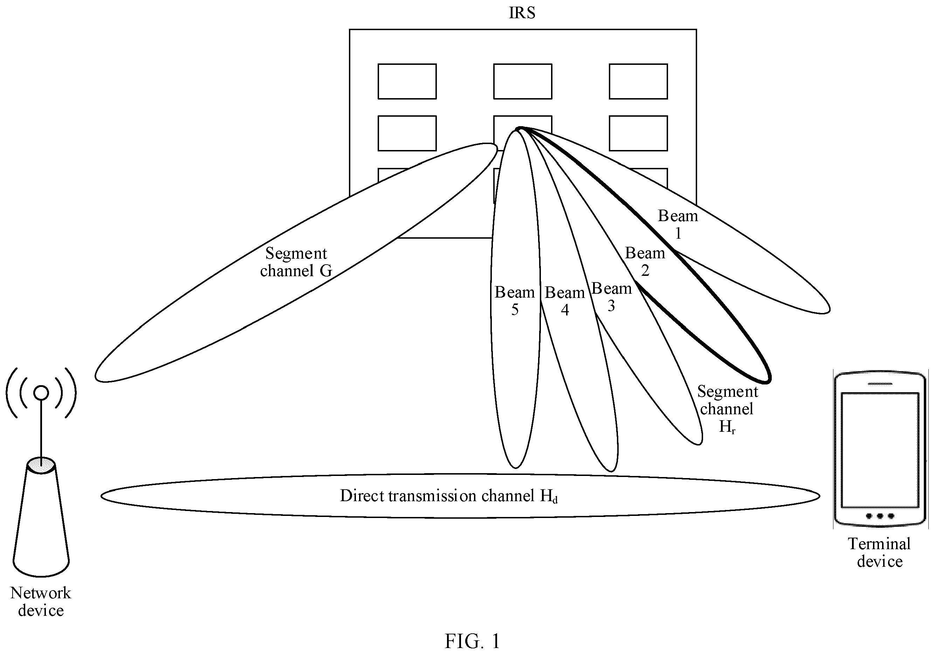

For example, FIG. 1 is a diagram of an architecture of an IRS-assisted wireless communication system (which may also be referred to as an IRS system for short) according to an embodiment of this application. As shown in FIG. 1, when a network device sends radio signals to a terminal device, some radio signals may be directly transmitted to the terminal device, and some radio signals are sent to the terminal device after being reflected by an IRS. In other words, the radio signal is sent to the terminal device through the following three channels: a channel directly from the network device to the terminal device (namely, a direct transmission channel $\mathbf{H_d}$), a channel from the network device to the IRS (namely, a segment channel $\mathbf{G}$), and a channel from the IRS to the terminal device (namely, a segment channel $\mathbf{H_r}$). The segment channel $\mathbf{G}$ and the segment channel $\mathbf{H_r}$ are used to form a reflection channel.

Based on this, a downlink equivalent channel $\mathbf{H}$ on a frequency unit during downlink transmission of the radio signal may be represented as $\mathbf{H} = \mathbf{H_d} + \mathbf{H_r}\Phi\mathbf{G}$, where $\mathbf{H_d} \in C^{N_R \times N_T}$, $\mathbf{H_r} \in C^{N_R \times N_I}$, $\Phi \in C^{N_I \times N_I}$, $\mathbf{G} \in C^{N_I \times N_T}$, and $N_R$, $N_T$, and $N_I$ respectively represent a quantity of receive antennas of the terminal device, a quantity of transmit antennas of the network device, and a quantity of array elements of the IRS. $\Phi$ is a beam weight used when the IRS reflects the radio signal, and represents an optimal beam pointing to the terminal device. The network device may find, through beam management, the optimal beam $\Phi$ (for example, a beam 2) pointing to the terminal device, and configure $\Phi$ for the IRS for reflection. For a specific process, refer to related descriptions in an existing implementation solution. Details are not described herein again. $\mathbf{H_r}\Phi\mathbf{G}$ is a reflection channel of the network device->the IRS->the terminal device.

Further, a radio signal obtained through transmission via the downlink equivalent channel may be represented as $\mathbf{Y} = \mathbf{H_d}\mathbf{w} + \mathbf{H_r}\Phi\mathbf{G}\mathbf{w}$. $\mathbf{w} \in C^{N_T \times N_L}$, $N_L$ is a quantity of transport streams, and $\mathbf{w}$ is a downlink precoding matrix.

EP 4 633 264 A1

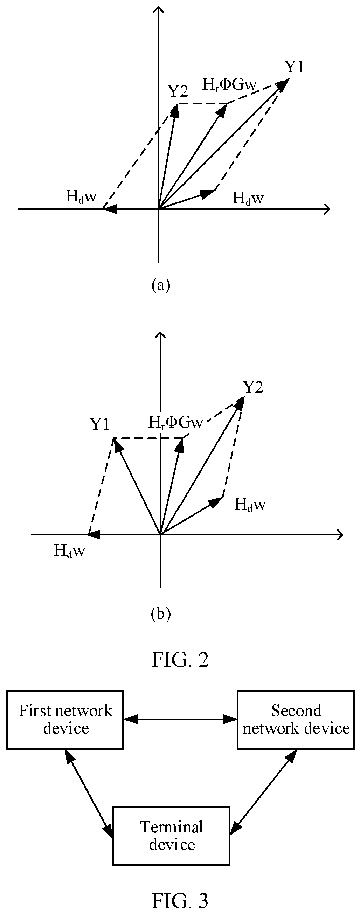

However, when the IRS reflects a signal, the optimal beam $\Phi$ determined through beam management cannot ensure that a signal passing through the direct transmission channel and a signal passing through the reflection channel can be superposed in phase, that is, $\mathrm{SNR}_1 = \frac{|H_d w + H_r \Phi G w|^2}{\sigma^2} \le \mathrm{SNR}_2 = \frac{|H_d w|_2^2 + |H_r \Phi G w|^2}{\sigma^2}$, to maximize an SINR (because interference is not considered herein, SINR= $\mathrm{SNR}_1$) of a signal passing through the equivalent channel. As shown in (a) in FIG. 2, when a gain of the IRS is extremely large or extremely small, energy of signals superposed when $H_d w$ and $H_r \Phi G w$ are in invert phase is close to energy of signals superposed when $H_d w$ and $H_r \Phi G w$ are in phase. As further shown in (b) in FIG. 2, when a gain of the IRS is average, energy of signals superposed when $H_d w$ and $H_r \Phi G w$ are in invert phase is clearly less than energy of signals superposed when $H_d w$ and $H_r \Phi G w$ are in phase.

Therefore, to ensure that $\mathrm{SINR} = \mathrm{SNR}_1 = \frac{|H_d w + H_r \Phi G w|^2}{\sigma^2}$ of the signal passing through the downlink equivalent channel is maximized, so that $\mathrm{SINR} = \frac{|H_d w|_2^2 + |H_r \Phi G w|^2}{\sigma^2}$, where $\sigma^2$ is noise power, embodiments of this application provide a communication method.

For example, FIG. 3 is a diagram of an architecture of a communication system according to an embodiment of this application. As shown in FIG. 3, the communication system includes a first network device, a second network device, and a terminal device. The first network device, the second network device, and the terminal device may communicate with each other. The second network device is configured to directionally reflect a signal sent by the first network device to the terminal device, to change quality of the signal received by the terminal device and reduce a coverage blind spot of the first network device. That is, the second network device is configured to assist in communication between the terminal device and the first network device.

For example, the first network device sends first indication information and time-frequency resources of N downlink reference signals to the second network device. Correspondingly, the second network device receives the first indication information and the time-frequency resources of the N downlink reference signals from the first network device. The first indication information indicates one first beam weight corresponding to the second network device on a time-frequency resource of each of the N downlink reference signals. There are N first beam weights in total, at least two of the first beam weights are different, and N is a positive integer greater than 1. In addition, the first network device sends second indication information and the time-frequency resources of the N downlink reference signals to the terminal device. Correspondingly, the terminal device receives the second indication information and the time-frequency resources of the N downlink reference signals from the first network device. The second indication information indicates one first phase corresponding to the terminal device on the time-frequency resource of each of the N downlink reference signals. There are N first phases in total, and at least two of the first phases are different. In addition, the first network device sends the N downlink reference signals to the terminal device. Correspondingly, the terminal device receives the N downlink reference signals from the first network device. Therefore, the terminal device determines phase reporting information based on the second indication information and the N downlink reference signals, and sends the phase reporting information to the first network device. Correspondingly, the first network device receives the phase reporting information from the terminal device, and sends phase indication information to the second network device, where the phase indication information is determined based on the phase reporting information.

Optionally, the first network device in this embodiment of this application is a device that is located on a network side of the foregoing communication system and has wireless sending and receiving functions, or a chip or a chip system that may be disposed in the device. The network device includes but is not limited to: an access point (access point, AP) in a wireless fidelity (wireless fidelity, Wi-Fi) system, for example, a home gateway, a router, a server, a switch, or a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmit/receiving point or a transmit point (transmit/receiving point, TRP or transmit point, TP), or the like. The network device may alternatively be a gNB or a transmit/receiving point or a transmit point (TRP or TP) in a 5G system, for example, a new radio (new radio, NR) system, or one antenna panel or a group of antenna panels (including a plurality of antenna panels) of a base station in the 5G system. The network device may alternatively be a network node, for example, a baseband unit (BBU) or a distributed unit (distributed unit, DU), that constitutes a gNB or a transmit point, a road side unit (road side unit, RSU) having a base station function, or the like.

Optionally, the second network device in this embodiment of this application may be an IRS, and includes a large quantity of low-cost passive reflection units. The IRS can change quality of a signal received at a receive end through proper phase modulation (to be specific, setting a phase shift value of each reflection unit on the IRS, where after a phase shift of one reflection unit is performed on a channel h, the channel changes to $he^{j\varphi}$, $\varphi$ is a phase shift value set for the reflection unit, and one group of beamforming codes corresponds to one group of phase shift values), and expand a

10

coverage area of a radio signal of the network device. The IRS may further reduce or cancel an interference signal through proper phase modulation, to improve communication experience at the receive end. In addition, the IRS may further increase a radio channel multipath by using a surface of the IRS, and reduce channel correlation, to improve a rank of a radio channel and implement transmission of more streams, so as to improve the communication experience at the receive end. Alternatively, the IRS may reduce a radio channel multipath by using a surface of the IRS, and improve channel correlation, to reduce a rank of a radio channel and reduce a transmission rate at the receive end at a specific position. In a time division duplex (time division duplex, TDD) technology, a phase shift array in the IRS is set, so that both uplink and downlink can be optimized. In other words, uplink channel quality is optimized while downlink channel quality is optimized. Because the IRS is introduced, transmit power of the network device may be properly reduced on a premise of same channel quality, to implement a specific network energy saving function. It should be understood that the second network device may alternatively be another network device, for example, a base station having an IRS, a base station or a network element having an IRS function, a base station or another network element implementing a signal reflection function, or another network element implementing receiving of indication information of the network device and completing phase adjustment, processing, and sending.

Optionally, the terminal device in this embodiment of this application is a terminal that accesses the foregoing communication system and has wireless sending and receiving functions, or a chip or a chip system that may be disposed in the terminal. The terminal device may also be referred to as user equipment (user equipment, UE), a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in this embodiment of this application may be a mobile phone (mobile phone), a tablet computer (Pad), a computer having wireless sending and receiving functions, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may implement the communication method provided in this application by using the vehicle-mounted module, the vehicle-mounted module assembly, the vehicle-mounted component, the vehicle-mounted chip, or the vehicle-mounted unit that is built in the vehicle.

It should be noted that the communication method provided in embodiments of this application is applicable to the first network device, the second network device, and the terminal device shown in FIG. 3. For specific implementation, refer to the following method embodiments. Details are not described herein.

It should be noted that the solutions in embodiments of this application may also be applied to another communication system, and a corresponding name may also be replaced with a name of a corresponding function in the another communication system.

It should be understood that FIG. 3 is merely a simplified diagram of an example for ease of understanding. The communication system may further include another network device and/or another terminal device that are/is not shown in FIG. 3.

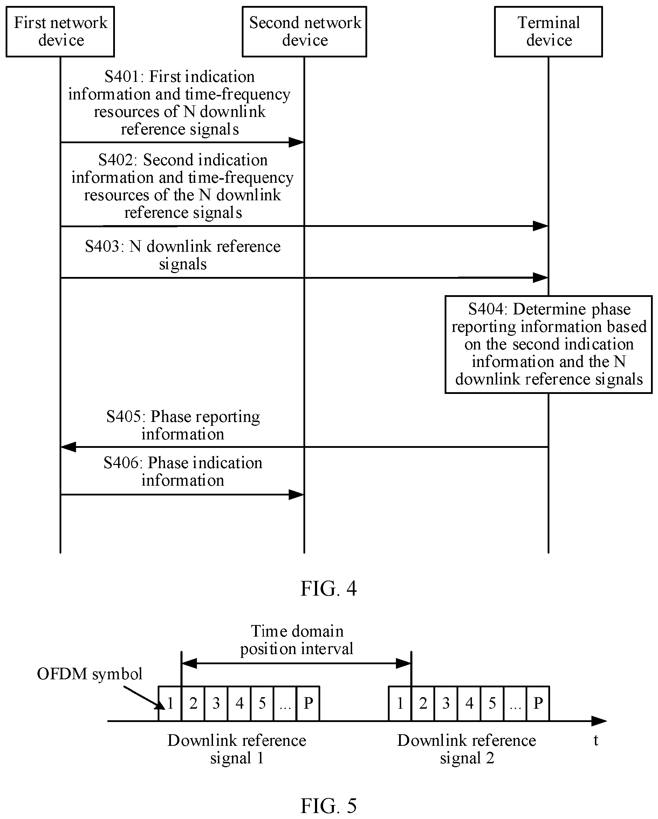

The following describes in detail the communication method provided in embodiments of this application with reference to FIG. 4 and FIG. 5.

For example, FIG. 4 is a schematic flowchart of a communication method according to an embodiment of this application. The communication method is applicable to the communication system shown in FIG. 3.

As shown in FIG. 4, the communication method includes the following steps.

S401: A first network device sends first indication information and time-frequency resources of N downlink reference signals to a second network device. Correspondingly, the second network device receives the first indication information and the time-frequency resources of the N downlink reference signals from the first network device.

In this embodiment of this application, the first indication information indicates one first beam weight corresponding to the second network device on a time-frequency resource of each of the N downlink reference signals. In other words, the first indication information correspondingly indicates the time-frequency resources of the N downlink reference signals and the corresponding N first beam weights. The first beam weight is used by the second network device to reflect, to a terminal device, the downlink reference signal from the first network device, and N is a positive integer greater than 1. In addition, at least two of the N first beam weights are different. In other words, there may be same first beam weights in the N first beam weights, but at least two of the N first beam weights are different. In other words, when N=2, the two first beam weights are different.

The N downlink reference signals are sent by the first network device to the terminal device, the downlink reference signal may be a demodulation reference signal (demodulation reference signal, DMRS) or a channel state information-reference signal (channel state information-reference signal, CSI-RS), and each of the N downlink reference signals includes a same quantity of time-frequency resources (that is, time domain resources and frequency domain resources). It should be understood that the N downlink reference signals do not overlap each other in time domain.

In this embodiment of this application, the first indication information indicates the N first beam weights used by the second network device on the time-frequency resources of the N downlink reference signals. In other words, the second network device may determine, based on the first indication information, first beam weights used on time-frequency resources of different downlink reference signals. In other words, the first indication information corresponds to the N downlink reference signals and the N first beam weights.

In a possible design solution, one first beam weight may alternatively be indicated by using one piece of indication information. In other words, the N first beam weights are respectively indicated by using N pieces of indication information. Each piece of indication information indicates one first beam weight of the second network device on a time-frequency resource of one downlink reference signal. Certainly, one piece of indication information may alternatively indicate a part of the N first beam weights. This is not specifically limited in this embodiment of this application.

The time-frequency resource of the downlink reference signal is used by the second network device to determine sending time of the downlink reference signal, so that the second network device may adjust the used first beam weight within a corresponding time period based on the first indication information. In other words, the first indication information may indicate the second network device to adjust first beam weights within sending time of different downlink reference signals. In other words, the first indication information may be used to change the beam weight used by the second network device.

It should be noted that, before the first network device sends the first indication information to the second network device, a beam weight used by the second network device for reflection is an optimal beam that is determined by the first network device through beam management and that points to the terminal device from the second network device, so that it can be ensured that strength of a signal reflected by the second network device to the terminal device is high enough. In other words, the second network device has an initial beam weight $\Phi_0$ (which may also be referred to as an initial first beam weight or an initial value of a first beam weight), and the initial beam weight $\Phi_0$ is sent by the first network device to the second network device. In addition, one beam weight corresponds to two parts: an amplitude and a phase. In this embodiment of this application, adjusting the beam weight usually means adjusting the phase of the beam weight.

In a possible design solution, the first indication information may directly indicate the N first beam weights used by the second network device on the time-frequency resources of the N downlink reference signals.

For example, N=3, and the first indication information indicates that the three first beam weights used by the second network device on the time-frequency resources of the three downlink reference signals are respectively $\Phi_0 e^{j\varphi_1}$, $\Phi_0 e^{j\varphi_2}$, and $\Phi_0 e^{j\varphi_3}$. In this case, based on the first indication information, the second network device adjusts the initial beam weight $\Phi_0$ to $\Phi_0 e^{j\varphi_1}$ on a time-frequency resource of a 1st downlink reference signal, adjusts the first beam weight $\Phi_0 e^{j\varphi_1}$ to $\Phi_0 e^{j\varphi_2}$ on a time-frequency resource of a 2nd downlink reference signal, and adjusts the first beam weight $\Phi_0 e^{j\varphi_2}$ to $\Phi_0 e^{j\varphi_3}$ on a time-frequency resource of a 3rd downlink reference signal.

In another possible design solution, the first indication information may indicate, by using index information, first beam weights used by the second network device on time-frequency resources of different downlink reference signals, and different index information corresponds to different first beam weights. A correspondence between the index information and the first beam weight may be stored in the second network device in a form of a table.

For example, the following Table 1 shows a correspondence between a first index and a first beam weight according to an embodiment of this application. As shown in Table 1, values of different first indexes correspond to different first beam weights, and the first indication information may indicate, by using different first indexes, first beam weights used by the second network device on time-frequency resources of different downlink reference signals. For example, if the first indexes indicated by the first indication information are 1, 2, and 3, the second network device determines three corresponding first beam weights based on values of the indicated first indexes. For a process in which the second network device adjusts the beam weight after determining the first beam weight based on the first index, refer to related descriptions in the foregoing design solution. Details are not described herein again.

Table 1

| First index | First beam weight |
|---|---|
| 1 | $\Phi_0 e^{j\varphi_1}$ |
| 2 | $\Phi_0 e^{j\varphi_2}$ |
| 3 | $\Phi_0 e^{j\varphi_3}$ |
| ... | ... |
| Q (Q is a positive integer) | $\Phi_0 e^{j\varphi_Q}$ |

In still another possible design solution, the first indication information may indicate, by indicating phase information of a first beam weight, the first beam weight used by the second network device on a time-frequency resource of a downlink reference signal.

For example, N=3, and the first indication information indicates that phase information of the first beam weights used by the second network device on the time-frequency resources of the three downlink reference signals are respectively $e^{j\varphi_1}$, $e^{j\varphi_2}$, and $e^{j\varphi_3}$. In this case, based on the first indication information, the second network device may adjust the initial beam weight $\Phi_0$ to a first beam weight $\Phi_0 e^{j\varphi_1}$ on a time-frequency resource of a 1st downlink reference signal, adjust the first beam weight $\Phi_0 e^{j\varphi_1}$ to $\Phi_0 e^{j\varphi_2}$ on a time-frequency resource of a 2nd downlink reference signal, and adjust the first beam weight $\Phi_0 e^{j\varphi_2}$ to $\Phi_0 e^{j\varphi_3}$ on a time-frequency resource of a 3rd downlink reference signal.

In still another possible design solution, the first indication information may alternatively indicate, by using index information, phase information of first beam weights used by the second network device on time-frequency resources of different downlink reference signals, and different index information indicates different phase information. A correspondence between the index information and the phase information may be stored in the second network device in a form of a table.

For example, the following Table 2 shows a correspondence between a second index and phase information of a first beam weight according to an embodiment of this application. As shown in Table 2, values of different second indexes correspond to phase information of different first beam weights, and the first indication information may indicate, by using different second indexes, phase information of first beam weights used by the second network device on time-frequency resources of different downlink reference signals. For example, if the second indexes indicated by the first indication information are 1, 2, and 3, the second network device may determine phase information of corresponding first beam weights based on values of the indicated second indexes. For a process in which the second network device adjusts the beam weight after obtaining the phase information of the first beam weight, refer to related descriptions in the foregoing design solution. Details are not described herein again.

Table 2

| Second index | Phase information of a first beam weight |
|---|---|
| 1 | $e^{j\varphi_1}$ |
| 2 | $e^{j\varphi_2}$ |
| 3 | $e^{j\varphi_3}$ |
| ... | ... |
| Q | $e^{j\varphi_Q}$ |

In a possible design solution, the time-frequency resources of the N downlink reference signals may be sent together, or may be separately sent.

In a possible design solution, the first indication information and the time-frequency resources of the N downlink reference signals may be sent together. For example, the first indication information and the time-frequency resources of the N downlink reference signals may be carried in a same message for sending, or the first indication information includes the time-frequency resources of the N downlink reference signals. Certainly, the first indication information and the time-frequency resources of the N downlink reference signals may alternatively be separately sent. This is not specifically limited in this embodiment of this application.

Further, after obtaining the first indication information and the time-frequency resources of the N downlink reference signals, the second network device may adjust a beam weight based on the first indication information and the time-frequency resources of the N downlink reference signals, to reflect a downlink reference signal by using the corresponding beam weight within a specified time period.

S402: The first network device sends second indication information and the time-frequency resources of the N downlink reference signals to the terminal device. Correspondingly, the terminal device receives the second indication information and the time-frequency resources of the N downlink reference signals from the first network device.

In this embodiment of this application, the second indication information indicates one first phase corresponding to the terminal device on the time-frequency resource of each of the N downlink reference signals. In other words, the second indication information correspondingly indicates the time-frequency resources of the N downlink reference signals and the corresponding N first phases. The first phase indicates a phase of a signal received by the terminal device on a time-frequency resource of a downlink reference signal, and the first phase corresponds to a phase of the first beam weight. At least two of the N first phases are different.

When N=2, the two first phases indicated by the second indication information are different, and correspondingly, the two first beam weights indicated by the first indication information are different. When N>2, at least two of the N first phases indicated by the second indication information are different, and correspondingly, at least two of the N first beam weights indicated by the second indication information are different. Certainly, the N first phases indicated by the second indication information may include first phases with a same value. This is not specifically limited in this embodiment of this application.

In a possible design solution, one first phase may alternatively be indicated by using one piece of indication information. In other words, the N first phases are respectively indicated by using N pieces of indication information. Each piece of indication information indicates one first phase of the terminal device on a time-frequency resource of one downlink reference signal. Certainly, one piece of indication information may alternatively indicate a part of the N first phases. This is not specifically limited in this embodiment of this application.

In a possible design solution, at least one of phase differences between any two of the N first phases is greater than or equal to a first preset value. In other words, a phase difference between two different first phases is greater than or equal to the first preset value. It should be understood that a larger phase difference between two different first phases indicates a larger signal diversity gain of two received downlink reference signals, so that phase reporting information determined by the terminal device is more accurate, and further a phase difference that is between a signal passing through a direct transmission channel and a signal passing through a reflection channel and that is determined based on the phase reporting information is more accurate.

In a possible design solution, the second indication information may directly indicate first phases of signals received by the terminal device on time-frequency resources of different downlink reference signals. For example, N=3, and the second indication information indicates that a first phase of a signal received by the terminal device on a time-frequency resource of a $1^{st}$ downlink reference signal is $e^{j\varphi_1}$ a first phase of a signal received on a time-frequency resource of a $2^{nd}$ downlink reference signal is $e^{j\varphi_2}$, and a first phase of a signal received on a time-frequency resource of a $3^{rd}$ downlink reference signal is $e^{j\varphi_3}$.

In another possible design solution, the second indication information may alternatively indicate, by using index information, first phases of signals received by the terminal device on time-frequency resources of different downlink reference signals, and different index information corresponds to different first phases.

For example, the following Table 3 shows a correspondence between a third index and a first phase according to an embodiment of this application. As shown in Table 3, values of different third indexes correspond to different first phases, and the second indication information may indicate, by using different third indexes, first phases of signals received on time-frequency resources of different downlink reference signals. For example, if the third indexes indicated by the second indication information are 1, 2, and 3, the terminal device may obtain, based on values of the three third indexes indicated by the second indication information, three corresponding first phases: $e^{j\varphi_1}$, $e^{j\varphi_2}$, and $e^{j\varphi_3}$.

Table 3

| Third index | First phase |
|---|---|
| 1 | $e^{j\varphi_1}$ |
| 2 | $e^{j\varphi_2}$ |
| 3 | $e^{j\varphi_3}$ |
| ... | ... |
| Q | $e^{j\varphi_Q}$ |

It may be understood that, when the first indication information directly or indirectly indicates the phase information of the first beam weight, the first indication information and the second indication information may be same indication information. Therefore, both the second network device and the terminal device may determine, based on the same indication information, the phase information of the beam weight used on the time-frequency resource of the corresponding downlink reference signal, that is, a first phase of a signal received by the terminal device on the time-frequency resource of the downlink reference signal. Alternatively, when the first indication information and the second indication information both indicate the first beam weight and the phase information of the first beam weight, the first network device may indicate, by using one piece of indication information, the first beam weight used by the second network device and the first phase of the terminal device.

S403: The first network device sends the N downlink reference signals to the terminal device. Correspondingly, the terminal device receives the N downlink reference signals from the first network device.

In this embodiment of this application, the first network device may periodically or aperiodically send the N downlink reference signals to the terminal device. A time domain position interval between any two of the N downlink reference signals is less than or equal to a first interval, and the first interval is determined based on channel coherence time between the first network device and the terminal device.

In this embodiment of this application, any two downlink reference signals may be two consecutively sent downlink reference signals, or may be two downlink reference signals that are sent at an interval of one or more downlink reference signals.

The time domain position interval between any two downlink reference signals may be a time interval between start positions or end positions of $i^{th}$ orthogonal frequency division multiplexing (orthogonal frequency division multiplexing, OFDM) symbols (symbols) of the two downlink reference signals, may be a time interval between a start position or an end position of an $i^{th}$ OFDM symbol of a $1^{st}$ downlink reference signal and a start position or an end position of a $j^{th}$ OFDM symbol of a $2^{nd}$ downlink reference signal, may be a time interval between start positions or end positions of $i^{th}$ slots (slots) of the two downlink reference signals, or may be a time interval between a start position or an end position of an $i^{th}$ slot of a $1^{st}$ downlink reference signal and a start position or an end position of a $j^{th}$ slot of a $2^{nd}$ downlink reference signal. This is not specifically limited in this embodiment of this application. $1 \leq i, j \leq P$, P is a total quantity of OFDM symbols or a total quantity of slots of the downlink reference signal, i, j, and P are positive integers, and $i \neq j$.

In this embodiment of this application, the channel coherence time between the first network device and the terminal device represents a maximum time difference in a case that a channel between the first network device and the terminal device remains constant or is basically unchanged. In other words, attenuation degrees of signals sent by the first network device to the terminal device within the channel coherence time are similar. The channel coherence time may be represented as a reciprocal of Doppler spread, and is associated with a relative movement speed, movement directions, and the like of the first network device and the terminal device.

For example, FIG. 5 is a diagram of a structure of a time domain position interval between two downlink reference signals according to an embodiment of this application. As shown in FIG. 5, a time domain position interval between a downlink reference signal 1 and a downlink reference signal 2 is a time interval between a start position of a $2^{nd}$ OFDM symbol of the downlink reference signal 1 and a start position of a $2^{nd}$ OFDM symbol of the downlink reference signal 2, and the time interval is less than or equal to the first interval determined based on the channel coherence time.

S404: The terminal device determines the phase reporting information based on the second indication information and the N downlink reference signals.

The phase reporting information indicates a phase difference between a signal passing through a first channel and a signal passing through a second channel. The first channel is a channel for direct communication between the first network device and the terminal device, and the second channel is a channel for communication between the first network device and the terminal device through the second network device. In other words, the phase reporting information is used to feed back a phase difference between a signal passing through a direct transmission channel and a signal passing through a reflection channel.

In a possible design solution, the phase reporting information may be determined based on at least two of the N downlink reference signals. In other words, the terminal device may determine the phase reporting information by selecting only any two downlink reference signals with different first phases in the N first phases corresponding to the N downlink reference signals for measurement, may determine the phase reporting information by performing measurement by using the N downlink reference signals, or may determine the phase reporting information by selecting more than two downlink reference signals for measurement. This is not specifically limited in this embodiment of this application.

In a possible design solution, the phase reporting information may include K pieces of phase information respectively corresponding to K frequency units in M frequency units, the M frequency units are frequency resources occupied by a downlink reference signal, a time-frequency resource of each downlink reference signal includes M frequency units, K and M are positive integers, and $1 \leq K \leq M$. The K pieces of phase information corresponding to the K frequency units are used to determine the phase difference between the signal passing through the first channel and the signal passing through the second channel.

It should be noted that one frequency unit (that is, one subband) corresponds to one subchannel (which may be referred to as a first subchannel) of the first channel and one subchannel (which may be referred to as a second subchannel) of the second channel. In other words, the first channel for transmitting the downlink reference signal includes M first subchannels, and the second channel includes M second subchannels. Therefore, the K pieces of phase information corresponding to the K frequency units respectively indicate K phase differences between signals passing through the K first subchannels and signals passing through the K second subchannels that correspond to the K frequency units.

In a possible design solution, the K frequency units used to determine the phase reporting information may be configured by the first network device for the terminal device. For example, the first network device sends third indication information to the terminal device. Correspondingly, the terminal device receives the third indication information from the first network device. The third indication information indicates an association relationship between the K pieces of phase information included in the phase reporting information and the K frequency units of the downlink reference signal, and the third indication information may be used to determine the phase reporting information. Therefore, the terminal device may calculate the phase reporting information based on the K frequency units indicated by the third indication information. In this scenario, the terminal device determines the phase reporting information based on the second indication information, the time-frequency resources of the N downlink reference signals, the N downlink reference signals, and the third indication information.

Optionally, the third indication information may be sent in a bitmap manner. In other words, the association relationship between the phase reporting information and the K frequency units of the downlink reference signal may be indicated by using an L-bit bitmap, where L is a positive integer, and L ≥ M. One bit in the bitmap indicates whether one frequency unit is used to determine the phase reporting information. For example, if a value of a bit is 0, it indicates that a frequency unit corresponding to the bit is not used to determine the phase reporting information. If a value of a bit is 1, it indicates that a frequency unit corresponding to the bit is used to determine the phase reporting information. It may be understood that M bits in the L-bit bitmap respectively indicate the M frequency units of the downlink reference signal, and the M bits sequentially indicate the M frequency units. If L > M, the first network device may further indicate, by using L-M bits, a calculation manner of determining the phase reporting information based on the K frequency units. For example, if L-M=2, the first network device may separately indicate different calculation manners by using 00, 01, 10, and 11. Different calculation manners may correspond to different phase estimation algorithms.

In another possible design solution, the K frequency units used to determine the phase reporting information may be selected by the terminal device. For example, the terminal device may select, based on a calculation capability, a quantity of frequency units used to determine the phase reporting information, so that calculation pressure of the terminal device can be reduced.

For example, N=2, the downlink reference signal is a DMRS, each DMRS includes M frequency units, and the second indication information indicates two different first phases. For example, the second indication information indicates that a first phase of a DMRS 1 received by the terminal device on a time-frequency resource of the DMRS 1 is $e^{j\varphi_1}$, and a first phase of a DMRS 2 received by the terminal device on a time-frequency resource of the DMRS 2 is $e^{j\varphi_2}$. Alternatively, the terminal device selects two downlink reference signals with different first phases from the received N (that is, N>2) first phases for measurement. For example, a first phase of a DMRS 1 received by the terminal device on a time-frequency resource of the DMRS 1 and a first phase of a DMRS 2 received by the terminal device on a time-frequency resource of the DMRS 2 that are indicated by the second indication information are different, and are respectively $e^{j\varphi_1}$ and $e^{j\varphi_2}$. In this case, the terminal device may select two downlink reference signals corresponding to $e^{j\varphi_1}$ and $e^{j\varphi_2}$ for measurement.

Therefore, the terminal device may select, based on the third indication information, K frequency units from M frequency units included in the time-frequency resource of the DMRS 1 and M frequency units included in the time-frequency resource of the DMRS 2, or the terminal device independently selects K frequency units, so that the terminal device determines the phase reporting information by receiving the signals DMRS 1 and DMRS 2 from the first network device on the K frequency units.

For example, a signal DMRS sent by the first network device is 1.

A signal DMRS 1 received by the terminal device on a channel corresponding to an $m^{th}$ frequency unit may be represented as:

$$\mathbf{y}_{1,m} = \mathbf{H}_{1,d,m}\mathbf{w} + \mathbf{H}_{1,r,m}\mathbf{\Phi}_0\mathbf{G}_{1,m}\mathbf{w}e^{j\varphi_1} + \mathbf{n}_{1,m}.$$

$\mathbf{y}_{1,m}$ is the signal DMRS 1 received by the terminal device on the $m^{th}$ frequency unit, $\mathbf{H}_{1,d,m}$ is a first subchannel corresponding to the $m^{th}$ frequency unit of the DMRS 1, $\mathbf{H}_{1,d,m}\mathbf{w}$ is the signal DMRS 1 passing through the first subchannel corresponding to the $m^{th}$ frequency unit of the DMRS 1, $\mathbf{H}_{1,r,m}\mathbf{\Phi}_0\mathbf{G}_{1,m}$ is a second subchannel corresponding to the $m^{th}$ frequency unit of the DMRS 1, $\mathbf{H}_{1,r,m}\mathbf{\Phi}_0\mathbf{G}_{1,m}\mathbf{w}e^{j\varphi_1}$ is the signal DMRS 1 passing through the second subchannel corresponding to the $m^{th}$ frequency unit, $\mathbf{n}_{1,m}$ represents noise of transmitting the DMRS 1 on an equivalent channel corresponding to the $m^{th}$ frequency unit, $\mathbf{H}_{1,d,m} \in C^{N_R \times N_T}$, $N_T$ is a quantity of transmit antennas of the first network device, $N_R$ is a quantity of receive antennas of the terminal device, m, $N_R$, and $N_T$ are positive integers, and $1 \leq m \leq K$.

A DMRS 2 received by the terminal device on a channel corresponding to an $m^{th}$ frequency unit may be represented as:

$$\mathbf{y}_{2,m} = \mathbf{H}_{2,d,m}\mathbf{w} + \mathbf{H}_{2,r,m}\mathbf{\Phi}_0\mathbf{G}_{2,m}\mathbf{w}e^{j\varphi_2} + \mathbf{n}_{2,m}.$$

$\mathbf{y}_{2,m}$ is the signal DMRS 2 received by the terminal device on the $m^{th}$ frequency unit, $\mathbf{H}_{2,d,m}$ is a first subchannel corresponding to the $m^{th}$ frequency unit of the DMRS 2, $\mathbf{H}_{2,d,m}\mathbf{w}$ is the signal DMRS 2 passing through the first subchannel corresponding to the $m^{th}$ frequency unit of the DMRS 2, $\mathbf{H}_{2,r,m}\mathbf{\Phi}_0\mathbf{G}_{1,m}$ is a second subchannel corresponding to the $m^{th}$ frequency unit of the DMRS 2, $\mathbf{H}_{2,r,m}\mathbf{\Phi}_0\mathbf{G}_{2,m}\mathbf{w}e^{j\varphi_1}$ is the signal DMRS 2 passing through the second subchannel corresponding to the $m^{th}$ frequency unit, $\mathbf{n}_{2,m}$ represents noise of transmitting the DMRS 2 on an equivalent channel corresponding to the $m^{th}$ frequency unit, and $\mathbf{H}_{2,d,m} \in C^{N_R \times N_T}$.

It should be noted that, in this embodiment of this application, when a same downlink reference signal is transmitted on subchannels corresponding to different frequency units, it is considered that the subchannels are basically unchanged within the channel coherence time. For example, it is considered that $\mathbf{H}_{1,d,m}$ is the same as $\mathbf{H}_{2,d,m}$, $\mathbf{H}_{1,r,m}$ is the same as $\mathbf{H}_{2,r,m}$, and $\mathbf{G}_{1,m}$ is the same as $\mathbf{G}_{2,m}$. Therefore, both $\mathbf{H}_{1,d,m}$ and $\mathbf{H}_{2,d,m}$ may be represented by $\mathbf{H}_{d,m}$, both $\mathbf{H}_{1,r,m}$ and $\mathbf{H}_{2,r,m}$ may be represented by $\mathbf{H}_{r,m}$, and both $\mathbf{G}_{1,m}$ and $\mathbf{G}_{2,m}$ may be represented by $\mathbf{G}_m$. $\mathbf{y}_{1,m}$ and $\mathbf{y}_{2,m}$ may be replaced with:

$$\mathbf{y}_{1,m} = \mathbf{H}_{d,m}\mathbf{w} + \mathbf{H}_{r,m}\boldsymbol{\Phi}_0\mathbf{G}_m\mathbf{w}e^{j\varphi_1} + \mathbf{n}_{1,m};$$

and

$$\mathbf{y}_{2,m} = \mathbf{H}_{d,m}\mathbf{w} + \mathbf{H}_{r,m}\boldsymbol{\Phi}_0\mathbf{G}_m\mathbf{w}e^{j\varphi_2} + \mathbf{n}_{2,m}.$$

Therefore, $\mathbf{y}_{1,m}$ and $\mathbf{y}_{2,m}$ may be combined to obtain $\underbrace{\begin{bmatrix}\mathbf{y}_{1,m}\\\mathbf{y}_{2,m}\end{bmatrix}}_{\mathbf{y}} = \underbrace{\begin{bmatrix}1 & e^{j\varphi_1}\\1 & e^{j\varphi_2}\end{bmatrix}}_{\mathbf{A}}\underbrace{\begin{bmatrix}\mathbf{H}_{d,m}\mathbf{w}\\\mathbf{H}_{r,m}\boldsymbol{\Phi}_0\mathbf{G}_m\mathbf{w}\end{bmatrix}}_{\mathbf{x}} + \underbrace{\begin{bmatrix}\mathbf{n}_{1,m}\\\mathbf{n}_{2,m}\end{bmatrix}}_{\mathbf{n}}$,

where $\mathbf{y}$ and $\mathbf{A}$ are known, and $\mathbf{x} = (\mathbf{A}^H\mathbf{A})^{-1}\mathbf{A}^H\mathbf{y}$.

Further, it may be obtained that an $m^{th}$ piece of phase information (that is, a phase difference between a signal on the first subchannel and a signal on the second subchannel) $\theta_m$ corresponding to the $m^{th}$ frequency unit is

$\theta_m = \angle\left(\dfrac{\mathbf{x}_2}{\mathbf{x}_1}\right)$, where $\mathbf{x}_1$ is $\mathbf{H}_{d,m}\mathbf{w}$, $\mathbf{x}_2$ is $\mathbf{H}_{r,m}\boldsymbol{\Phi}_0\mathbf{G}_m\mathbf{w}$, dimensions of $\mathbf{x}_1$ and $\mathbf{x}_2$ are both $N_R \times N_L$, $N_L$ is a quantity of transport streams, and $N_L$ is a positive integer.

Further, $\theta_m = \dfrac{\sum_{a=1}^{N_R}\sum_{b=1}^{b=N_L}\angle\left(\frac{x_2^{a,b}}{x_1^{a,b}}\right)}{N_R \times N_L}$, where $x_1^{a,b}$ is an element in an $a^{th}$ row and a $b^{th}$ column of $\mathbf{x}_1$, and $x_2^{a,b}$ is an element in an $a^{th}$ row and a $b^{th}$ column of $\mathbf{x}_2$.

Therefore, the terminal device may determine, based on the foregoing process, the K pieces of phase information (for example, $\theta_1$, $\theta_2$, ..., and $\theta_K$) by using the signals received on the K frequency units selected from the M frequency units of the DMRS 1 and the M frequency units of the DMRS 2. The K pieces of phase information are respectively used to feed back phase differences between signals on K first subchannels and signals on K second subchannels, and the K pieces of phase information (for example, $\theta_1$, $\theta_2$, ..., and $\theta_K$) are determined as the phase reporting information.

It should be noted that, when the terminal device determines the phase reporting information by using more than two downlink reference signals, the terminal device may obtain the phase reporting information by performing the foregoing processing process on every two received downlink reference signals, and perform processing such as weighted averaging on a plurality of pieces of obtained phase reporting information.

For example, N=3, first phases of three received downlink reference signals (for example, a DMRS 1 to a DMRS 3) are different, and the three first phases are respectively $e^{j\varphi_1}$, $e^{j\varphi_2}$, and $e^{j\varphi_3}$. In this case, the terminal device may separately perform the foregoing processing process on the received signal DMRS 1 and the received signal DMRS 2, the received signal DMRS 1 and the received signal DMRS 3, and the received signal DMRS 2 and the received signal DMRS 3, to separately obtain K pieces of phase information, for example, $\theta_1^1$, $\theta_2^1$, ..., and $\theta_K^1$, $\theta_1^2$, $\theta_2^2$, ..., and $\theta_K^2$, and $\theta_1^3$, $\theta_2^3$, ..., and $\theta_K^3$. In addition, weighted averaging is performed on $\theta_1^1$, $\theta_1^2$, and $\theta_1^3$ to obtain $\theta_1'$, weighted averaging is performed on $\theta_2^1$, $\theta_2^2$, and $\theta_2^3$ to obtain $\theta_2'$, and by analogy, weighted averaging is performed on $\theta_K^1$, $\theta_K^2$, and $\theta_K^3$ to obtain $\theta_K'$, so that $\theta_1'$, $\theta_2'$, ..., and $\theta_K'$ are determined as the phase reporting information.

For another example, N=3, and there are first phases with a same value in first phases of three received downlink reference signals (for example, a DMRS 1 to a DMRS 3). For example, the three first phases are respectively $e^{j\varphi_1}$, $e^{j\varphi_2}$, and $e^{j\varphi_1}$. In this case, the terminal device may separately perform the foregoing processing process on the received signal DMRS 1 and the received signal DMRS 2, and the received signal DMRS 1 and the received signal DMRS 3, to separately obtain K pieces of phase information, for example, $\theta_1^1$, $\theta_2^1$, ..., and $\theta_K^1$, and $\theta_1^2$, $\theta_2^2$, ..., and $\theta_K^2$. Weighted averaging is performed on $\theta_1^1$ and $\theta_1^2$ to obtain $\theta_1'$, weighted averaging is performed on $\theta_2^1$ and $\theta_2^2$ to obtain $\theta_2'$, and by analogy, weighted averaging is performed on $\theta_K^1$ and $\theta_K^2$ to obtain $\theta_K'$, so that $\theta_1'$, $\theta_2'$, ..., and $\theta_K'$ are determined as the phase reporting information.

In another possible design solution, the phase reporting information may directly indicate the phase difference between the signal on the first channel and the signal on the second channel. In other words, the phase reporting information is the phase difference between the signal on the first channel and the signal on the second channel. In this case, the phase reporting information is equivalent to phase indication information.

For example, after determining the K pieces of phase information corresponding to the K frequency units, the terminal device performs weighted averaging on the K pieces of phase information to obtain the phase reporting information. For example, the phase reporting information is determined according to the following formula: $\theta = \frac{\sum_{m=1}^{K} \theta_m}{K}$ . It should be understood that weighted averaging may alternatively be performed on the K pieces of phase information after screening for a maximum value or a minimum value. A manner of processing the K pieces of phase information is not limited in this embodiment of this application.

For another example, the terminal device may aggregate downlink reference signals received on each frequency unit, to obtain a total received signal of each downlink reference signal, so that the phase reporting information can be determined by using the total received signal of each downlink reference signal. For example, the signal DMRS 1 received by the terminal device is $\mathbf{y}_1 = \mathbf{H}_d\mathbf{w} + \mathbf{H}_r\mathbf{\Phi}_0\mathbf{G}\mathbf{w}e^{j\varphi 1} + \mathbf{n}_1$, and the signal DMRS 2 received by the terminal device is $\mathbf{y}_2 = \mathbf{H}_d\mathbf{w} + \mathbf{H}_r\mathbf{\Phi}_0\mathbf{G}\mathbf{w}e^{j\varphi 2} + \mathbf{n}_2$. $\theta = \angle\left(\frac{\mathbf{x}_2}{\mathbf{x}_1}\right)$ may be obtained with reference to the foregoing process, and represents the phase difference between the signal on the first channel and the signal on the second channel.

In this case, a process in which the terminal device determines the phase reporting information by using more than two downlink reference signals is similar to that in the foregoing design solution. Details are not described herein again.

It should be noted that $\mathbf{y}_{1,m}$, $\mathbf{H}_{1,d,m}$, $\mathbf{w}$, $\mathbf{H}_{1,r,m}$, and the like in this embodiment of this application are all parameters in a matrix form.

S405: The terminal device sends the phase reporting information to the first network device. Correspondingly, the first network device receives the phase reporting information from the terminal device.

In a possible design solution, when the phase reporting information includes the K pieces of phase information corresponding to the K frequency units, if the K frequency units are selected independently by the terminal device, after determining the phase reporting information, the terminal device may notify the first network device of the association relationship between the K frequency units and the phase reporting information. Therefore, the first network device may determine the phase reporting information as the phase indication information based on fourth indication information.

For example, the terminal device sends the fourth indication information to the first network device. Correspondingly, the first network device receives the fourth indication information from the terminal device. The fourth indication information indicates the association relationship between the K pieces of phase information included in the phase reporting information and the K frequency units of the downlink reference signal.

In a possible design solution, the fourth indication information may be sent together with the phase reporting information. For example, the phase reporting information includes the fourth indication information, or the phase reporting information and the fourth indication information are carried in a same message for sending. Certainly, the fourth indication information and the phase reporting information may alternatively be sent separately. This is not specifically limited in this embodiment of this application.

It may be understood that the fourth indication information is similar to the third indication information in the foregoing S404, and the fourth indication information may also be sent in the bitmap manner. For specific descriptions of the fourth indication information, refer to related descriptions of the third indication information in the foregoing S404. Details are not described herein again.

When the phase reporting information directly indicates the phase difference between the signal passing through the first channel and the signal passing through the second channel, the foregoing S405 and the following S406 may be replaced with that the terminal device sends the phase reporting information to the second network device, and correspondingly, the second network device receives the phase reporting information from the terminal device. Therefore, the second network device may adjust a current beam weight based on the phase reporting information, that is, perform phase compensation on the signal passing through the reflection channel by using the phase difference between the signal passing through the direct transmission channel and the signal passing through the reflection channel, so that the signal passing through the direct transmission channel and the signal passing through the reflection channel are superposed in phase, to improve quality of the received signal.

S406: The first network device sends the phase indication information to the second network device. Correspondingly, the second network device receives the phase indication information from the first network device.

The phase indication information is determined based on the phase reporting information.

When the phase reporting information includes the K pieces of phase information corresponding to the K frequency units, and the K frequency units are indicated by the first network device, the first network device may obtain the phase indication information with reference to the foregoing process of processing the K pieces of phase information by the terminal device. Details are not described herein again.

When the phase reporting information includes the K pieces of phase information corresponding to the K frequency units and the K frequency units are selected by the terminal device, the first network device determines the phase indication information based on the fourth indication information and the phase reporting information. For a specific implementation process, refer to the foregoing process of processing the K pieces of phase information by the terminal device to obtain the phase indication information. Details are not described herein again.

When the phase reporting information directly indicates the phase difference between the signal on the first channel and the signal on the second channel, the phase reporting information is the phase indication information. In this case, it is equivalent that the first network device forwards the phase reporting information to the second network device.

Therefore, after obtaining the phase indication information, the second network device may perform phase adjustment on a currently used first beam weight based on the phase difference indicated by the phase indication information, to compensate for a phase of the signal passing through the reflection channel, so that the signal passing through the direct transmission channel and the signal passing through the reflection channel can be superposed in phase, to further improve an SINR of the received signal.

Based on the communication method shown in FIG. 4, the first network device adjusts, by using the first indication information and the time-frequency resource of the downlink reference signal, the beam weight used when the second network device reflects the corresponding downlink reference signal, and sends the second indication information and the time-frequency resource of the downlink reference signal to the terminal device, to indicate a phase of the beam weight used for reflecting the corresponding downlink reference signal, so that the terminal device can determine, based on the second indication information, time-frequency resources of at least two downlink reference signals, and the at least two downlink reference signals, the phase reporting information indicating the phase difference between the signal passing through the direct transmission channel and the signal passing through the reflection channel, and send the phase reporting information to the first network device. In this way, the first network device can indicate, based on the phase reporting information, the second network device to adjust the beam weight used for reflection, that is, perform phase compensation on the signal passing through the reflection channel by using the phase difference between the signal passing through the direct transmission channel and the signal passing through the reflection channel, so that the signal passing through the direct transmission channel and the signal passing through the reflection channel can be superposed in phase, to improve the SINR of the signal received by the terminal device.

It may be understood that, in the foregoing embodiments, the method and/or the steps implemented by the first network device may alternatively be implemented by a component (for example, a processor, a chip, a chip system, a circuit, a logical module, or software) that may be used in the first network device. The method and/or steps implemented by the second network device may alternatively be implemented by a component (for example, a processor, a chip, a chip system, a circuit, a logical module, or software) that may be used in the second network device. The method and/or steps implemented by the terminal device may alternatively be implemented by a component (for example, a processor, a chip, a chip system, a circuit, a logical module, or software) that may be used in the terminal device.

The foregoing mainly describes the solutions provided in this application. Correspondingly, this application further provides a communication apparatus. The communication apparatus is configured to implement various methods in the foregoing method embodiments. The communication apparatus may be the first network device in the foregoing method embodiments, an apparatus including the first network device, or a component that may be used in the first network device, for example, a chip or a chip system. Alternatively, the communication apparatus may be the second network device in the foregoing method embodiments, an apparatus including the second network device, or a component that may be used in the second network device, for example, a chip or a chip system. Alternatively, the communication apparatus may be the terminal device in the foregoing method embodiments, an apparatus including the terminal device, or a component that may be used in the terminal device, for example, a chip or a chip system.

It may be understood that, to implement the foregoing functions, the communication apparatus includes corresponding hardware structures and/or software modules for performing the functions. A person skilled in the art should be easily aware that, in combination with the examples described in embodiments disclosed in this specification, units and algorithm steps can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used.

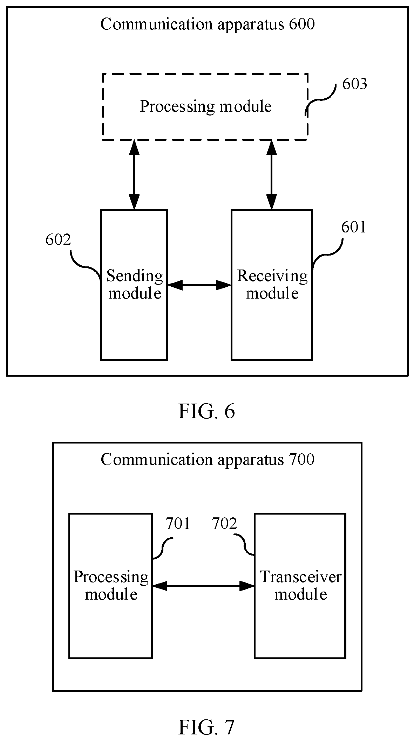

For example, the communication apparatus is the first network device in the foregoing method embodiments. FIG. 6 is a diagram of a structure of a communication apparatus according to an embodiment of this application. As shown in FIG. 6, a communication apparatus 600 includes a receiving module 601 and a sending module 602. The receiving module 601 is configured to implement a receiving function of the first network device in the foregoing method embodiments. The sending module 602 is configured to implement a sending function of the first network device in the foregoing method embodiments.

All related content of the steps in the foregoing method embodiments may be cited in function descriptions of the corresponding functional modules. Details are not described herein again.

The communication apparatus 600 provided in this embodiment may perform the foregoing communication method. Therefore, for technical effects that can be achieved by the communication apparatus 600, refer to the foregoing method embodiments. Details are not described herein again.

In a possible design solution, in this embodiment of this application, the receiving module 601 and the sending module 602 may alternatively be integrated into one module, for example, a transceiver module (not shown in FIG. 6). The transceiver module is configured to implement a sending function and a receiving function of the communication apparatus 600.

In a possible design solution, the communication apparatus 600 may further include a processing module 603 (shown by a dashed line box in FIG. 6). The processing module 603 is configured to implement a processing function of the communication apparatus 600.

In a possible design solution, the communication apparatus 600 may further include a storage module (not shown in FIG. 6), and the storage module stores a program or instructions. When the processing module 603 executes the program or the instructions, the communication apparatus 600 may perform a function of the first network device in the communication method shown in FIG. 4.

It should be understood that the processing module 603 in the communication apparatus 600 may be implemented by a processor or a processor-related circuit component, and may be a processor or a processing unit. The transceiver module may be implemented by a transceiver or a transceiver-related circuit component, and may be a transceiver or a transceiver unit.

For example, the communication apparatus is the terminal device in the foregoing method embodiments. FIG. 7 is a diagram of a structure of another communication apparatus according to an embodiment of this application. As shown in FIG. 7, a communication apparatus 700 includes a processing module 701 and a transceiver module 702. The processing module 701 is configured to implement a processing function of the terminal device in the foregoing method embodiments. The transceiver module 702 is configured to implement sending and receiving functions of the terminal device in the foregoing method embodiments.

All related content of the steps in the foregoing method embodiments may be cited in function descriptions of the corresponding functional modules. Details are not described herein again.

The communication apparatus 700 provided in this embodiment may perform the foregoing communication method. Therefore, for technical effects that can be achieved by the communication apparatus 700, refer to the foregoing method embodiments. Details are not described herein again.

In a possible design solution, in this embodiment of this application, the transceiver module 702 may include a receiving module and a sending module (not shown in FIG. 7). The transceiver module is configured to implement a sending function and a receiving function of the communication apparatus 700.

In a possible design solution, the communication apparatus 700 may further include a storage module (not shown in FIG. 7), and the storage module stores a program or instructions. When the processing module 701 executes the program or the instructions, the communication apparatus 700 may perform a function of the terminal device in the communication method shown in FIG. 4.

It should be understood that the processing module 701 in the communication apparatus 700 may be implemented by a processor or a processor-related circuit component, and may be a processor or a processing unit. The transceiver module 702 may be implemented by a transceiver or a transceiver-related circuit component, and may be a transceiver or a transceiver unit.

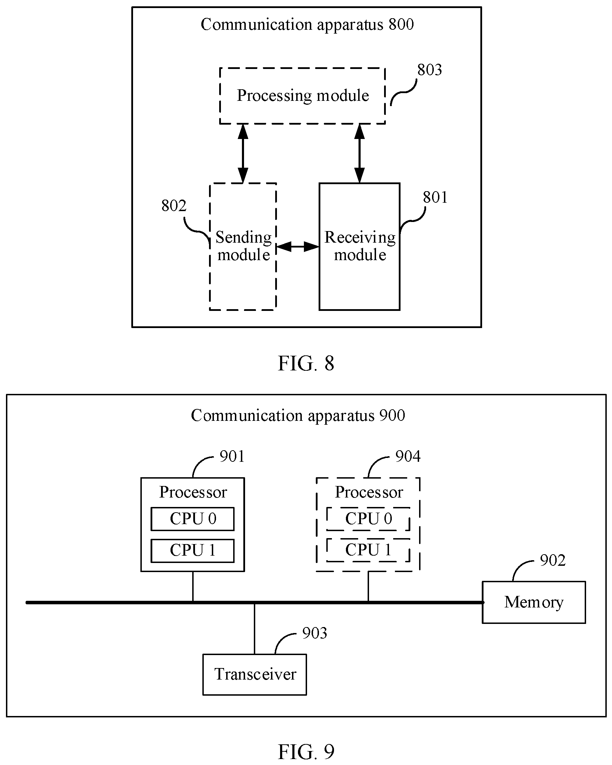

For example, the communication apparatus is the second network device in the foregoing method embodiments. FIG. 8 is a diagram of a structure of still another communication apparatus according to an embodiment of this application. As shown in FIG. 8, a communication apparatus 800 includes a receiving module 801. The receiving module 801 is configured to implement a receiving function of the second network device in the foregoing method embodiments.

All related content of the steps in the foregoing method embodiments may be cited in function descriptions of the corresponding functional modules. Details are not described herein again.

The communication apparatus 800 provided in this embodiment may perform the foregoing communication method. Therefore, for technical effects that can be achieved by the communication apparatus 800, refer to the foregoing method embodiments. Details are not described herein again.

In a possible design solution, the communication apparatus 800 may further include a sending module 802 (shown by a dashed line box in FIG. 8). The sending module 802 is configured to implement a sending function of the communication apparatus 800.

In a possible design solution, in this embodiment of this application, the receiving module 801 and the sending module 802 may alternatively be integrated into one module, for example, a transceiver module (not shown in FIG. 8). The transceiver module is configured to implement a sending function and a receiving function of the communication apparatus 800.

In a possible design solution, the communication apparatus 800 may further include a processing module 803 (shown by a dashed line box in FIG. 8). The processing module 803 is configured to implement a processing function of the communication apparatus 800.

In a possible design solution, the communication apparatus 800 may further include a storage module (not shown in FIG. 8), and the storage module stores a program or instructions. When the processing module 803 executes the program or the instructions, the communication apparatus 800 may perform a function of the second network device in the communication method shown in FIG. 4.

It should be understood that the processing module 803 in the communication apparatus 800 may be implemented by a processor or a processor-related circuit component, and may be a processor or a processing unit. The transceiver module may be implemented by a transceiver or a transceiver-related circuit component, and may be a transceiver or a transceiver unit.

For example, FIG. 9 is a diagram of a structure of still another communication apparatus according to an embodiment of this application. The communication apparatus may be the first network device, the terminal device, or the second network device, or may be a chip (system) or another part or component that may be disposed in the first network device, the terminal device, or the second network device. As shown in FIG. 9, a communication apparatus 900 may include a processor 901. In a possible design solution, the communication apparatus 900 may further include a memory 902 and/or a transceiver 903. The processor 901 is coupled to the memory 902 and the transceiver 903. For example, the processor 901 may be connected to the memory 902 and the transceiver 903 through a communication bus.

The following describes each component of the communication apparatus 900 in detail with reference to FIG. 9.

The processor 901 is a control center of the communication apparatus 900, and may be one processor or may be a collective term of a plurality of processing elements. For example, the processor 901 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

In a possible design solution, the processor 901 may execute various functions of the communication apparatus 900 by running or executing a software program stored in the memory 902 and invoking data stored in the memory 902.

During specific implementation, in an embodiment, the processor 901 may include one or more CPUs, for example, a CPU 0 and a CPU 1 shown in FIG. 9.

During specific implementation, in an embodiment, the communication apparatus 900 may alternatively include a plurality of processors, for example, the processor 901 and a processor 904 shown in FIG. 9. Each of the processors may be a single-core processor (single-CPU) or may be a multi-core processor (multi-CPU). The processor herein may be one or more devices, circuits, and/or processing cores configured to process data (for example, computer program instructions).

The memory 902 is configured to store a software program for executing the solutions in this application, and the processor 901 controls execution. For a specific implementation, refer to the foregoing method embodiments. Details are not described herein again.

In a possible design solution, the memory 902 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of instructions or a data structure and that can be accessed by a computer. However, this is not limited thereto. The memory 902 may be integrated with the processor 901, or may exist independently, and is coupled to the processor 901 through an interface circuit (not shown in FIG. 9) of the communication apparatus 900. This is not specifically limited in this embodiment of this application.

The transceiver 903 is configured to communicate with another communication apparatus. For example, the communication apparatus 900 is a terminal device, and the transceiver 903 may be configured to communicate with a network device or communicate with another terminal device. For another example, the communication apparatus 900 is a network device, and the transceiver 903 may be configured to communicate with a terminal device or communicate with another network device.

In a possible design solution, the transceiver 903 may include a receiver and a transmitter (not separately shown in FIG. 9). The receiver is configured to implement a receiving function, and the transmitter is configured to implement a sending function.

In a possible design solution, the transceiver 903 may be integrated with the processor 901, or may exist independently, and is coupled to the processor 901 through an interface circuit (not shown in FIG. 9) of the communication apparatus 900. This is not specifically limited in this embodiment of this application.

It should be noted that a structure of the communication apparatus 900 shown in FIG. 9 does not constitute a limitation on the communication apparatus. An actual communication apparatus may include more or fewer components than those shown in the figure, or combine some components, or have different component arrangement.

In addition, for technical effects of the communication apparatus 900, refer to the technical effects of the communication method in the foregoing method embodiments. Details are not described herein again.

An embodiment of this application further provides a communication system. The communication system includes the first network device, the terminal device, and the second network device.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the

EP 4 633 264 A1

technical solutions may be implemented in a form of a software product. The computer software product is stored in a storage medium, and includes several instructions for instructing a computer device (which may be a personal computer, a server, a network device, or the like) to perform all or some of the steps of the method in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

    sending, by a first network device, first indication information and time-frequency resources of N downlink reference signals to a second network device, wherein the first indication information indicates one first beam weight corresponding to the second network device on a time-frequency resource of each of the N downlink reference signals, there are N first beam weights in total, at least two of the first beam weights are different, and N is a positive integer greater than 1;
    sending, by the first network device, second indication information and the time-frequency resources of the N downlink reference signals to a terminal device, wherein the second indication information indicates one first phase corresponding to the terminal device on the time-frequency resource of each of the N downlink reference signals, there are N first phases in total, and at least two of the first phases are different;
    sending, by the first network device, the N downlink reference signals to the terminal device;
    receiving, by the first network device, the phase reporting information from the terminal device; and
    sending, by the first network device, phase indication information to the second network device, wherein the phase indication information is determined based on the phase reporting information.

2. The method according to claim 1, wherein the phase reporting information is determined based on at least two of the N downlink reference signals.

3. The method according to claim 1 or 2, wherein the time-frequency resource of each of the N downlink reference signals comprises M frequency units, the phase reporting information comprises K pieces of phase information respectively corresponding to K frequency units in the M frequency units, K and M are positive integers, and $1 \leq K \leq M$.

4. The method according to claim 3, wherein the method further comprises:
    sending, by the first network device, third indication information to the terminal device, wherein the third indication information indicates an association relationship between the K pieces of phase information comprised in the phase reporting information and the K frequency units of the downlink reference signal.

5. The method according to claim 3, wherein the method further comprises:
    receiving, by the first network device, fourth indication information from the terminal device, wherein the fourth indication information indicates an association relationship between the K pieces of phase information comprised in the phase reporting information and the K frequency units of the downlink reference signal.

6. The method according to claim 4 or 5, wherein the association relationship between the K pieces of phase information comprised in the phase reporting information and the K frequency units of the downlink reference signal is indicated by using an L-bit bitmap, wherein L is a positive integer, and $L \geq M$.

7. The method according to any one of claims 1 to 6, wherein at least one of phase differences between any two of the N first phases is greater than or equal to a first preset value.

8. The method according to any one of claims 1 to 7, wherein a time domain position interval between any two downlink reference signals is less than or equal to a first interval, and the first interval is determined based on channel coherence time between the first network device and the terminal device.

23

9. A communication method, wherein the method comprises:

   receiving, by a terminal device, second indication information and time-frequency resources of N downlink reference signals from a first network device, wherein the second indication information indicates one first phase corresponding to the terminal device on a time-frequency resource of each of the N downlink reference signals, there are N first phases in total, at least two of the first phases are different, and N is a positive integer greater than 1;
   receiving, by the terminal device, the N downlink reference signals from the first network device;
   determining, by the terminal device, phase reporting information based on the second indication information and the N downlink reference signals; and
   sending, by the terminal device, the phase reporting information to the first network device.

10. The method according to claim 9, wherein the phase reporting information is determined based on at least two of the N downlink reference signals.

11. The method according to claim 9 or 10, wherein the time-frequency resource of each of the N downlink reference signals comprises M frequency units, the phase reporting information comprises K pieces of phase information respectively corresponding to K frequency units in the M frequency units, K and M are positive integers, and $1 \leq K \leq M$.

12. The method according to claim 11, wherein the method further comprises:
   receiving, by the terminal device, third indication information from the first network device, wherein the third indication information indicates an association relationship between the K pieces of phase information comprised in the phase reporting information and the K frequency units of the downlink reference signal, and the third indication information is used to determine the phase reporting information.

13. The method according to claim 11, wherein the method further comprises:
   sending, by the terminal device, fourth indication information to the first network device, wherein the fourth indication information indicates an association relationship between the K pieces of phase information comprised in the phase reporting information and the K frequency units of the downlink reference signal, and the fourth indication information is used to determine the phase indication information.

14. The method according to claim 12 or 13, wherein the association relationship between the K pieces of phase information comprised in the phase reporting information and the K frequency units of the downlink reference signal is indicated by using an L-bit bitmap, wherein L is a positive integer, and $L \geq M$.

15. The method according to any one of claims 9 to 14, wherein at least one of phase differences between any two of the N first phases is greater than or equal to a first preset value.

16. The method according to any one of claims 9 to 15, wherein a time domain position interval between any two downlink reference signals is less than or equal to a first interval, and the first interval is determined based on channel coherence time between the first network device and the terminal device.

17. A communication method, wherein the method comprises:

   receiving, by a second network device, first indication information and time-frequency resources of N downlink reference signals from a first network device, wherein the first indication information indicates one first beam weight corresponding to the second network device on a time-frequency resource of each of the N downlink reference signals, there are N first beam weights in total, at least two of the first beam weights are different, and N is a positive integer greater than 1; and
   receiving, by the second network device, phase indication information from the first network device, wherein the phase indication information is related to the N first beam weights.

18. A communication apparatus, wherein the apparatus comprises a processing module and a transceiver module, wherein

   the processing module is configured to perform a processing function in the method according to any one of claims 1 to 17; and
   the transceiver module is configured to perform sending and receiving functions in the method according to any one of claims 1 to 17.

19. A communication apparatus, comprising a processor, wherein the processor is coupled to a memory; and the processor is configured to execute the computer program stored in the memory, to enable the communication apparatus to perform the method according to any one of claims 1 to 17.

20. A computer-readable storage medium, wherein the computer-readable storage medium stores a computer program or instructions, and when the computer program or the instructions are run on a computer, the computer is enabled to perform the method according to any one of claims 1 to 17.

21. A computer program product, wherein the computer program product comprises a computer program or instructions, and when the computer program or the instructions are run on a computer, the computer is enabled to perform the method according to any one of claims 1 to 17.

FIG. 1

EP 4 633 264 A1

(a)

(b)

FIG. 2

FIG. 3

EP 4 633 264 A1

| First network device | Second network device | Terminal device |
|---|---|---|

S401: First indication information and time-frequency resources of N downlink reference signals

S402: Second indication information and time-frequency resources of the N downlink reference signals

S403: N downlink reference signals

S404: Determine phase reporting information based on the second indication information and the N downlink reference signals

S405: Phase reporting information

S406: Phase indication information

**FIG. 4**

Time domain position interval

OFDM symbol

| 1 | 2 | 3 | 4 | 5 | ... | P |

Downlink reference signal 1

| 1 | 2 | 3 | 4 | 5 | ... | P |

Downlink reference signal 2

t

**FIG. 5**

28

Communication apparatus 600

Processing module 603

602 Sending module

601 Receiving module

FIG. 6

Communication apparatus 700

701 Processing module

702 Transceiver module

FIG. 7

Communication apparatus 800

Processing module 803

Sending module 802

Receiving module 801

FIG. 8

Communication apparatus 900

Processor 901

CPU 0

CPU 1

Processor 904

CPU 0

CPU 1

Memory 902

Transceiver 903

FIG. 9

## INTERNATIONAL SEARCH REPORT

| | International application No. |
|---|---|
| | **PCT/CN2023/141580** |

**A. CLASSIFICATION OF SUBJECT MATTER**

H04W 72/044(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 网络设备, 终端, 下行参考信号, 指示信息, 波束, 权值, 相位, 时频, 时间, 频率, 信噪比, 反射面, network, terminal, DCI, indicator, beam, weight, phase, time, frequency, SINR, IRS

**C. DOCUMENTS CONSIDERED TO BE RELEVANT**

| Category* | Citation of document, with indication, where appropriate, of the relevant passages | Relevant to claim No. |
|---|---|---|
| X | CN 114070370 A (VIVO COMMUNICATION TECHNOLOGY CO., LTD.) 18 February 2022 (2022-02-18) <br> description, paragraphs [0032]-[0222] | 9-16, 18-21 |
| A | CN 113727447 A (CHINA ACADEMY OF INFORMATION AND COMMUNICATIONS TECHNOLOGY) 30 November 2021 (2021-11-30) <br> entire document | 1-21 |
| A | CN 115208448 A (BEIJING UNIVERSITY OF POSTS AND TELECOMMUNICATIONS) 18 October 2022 (2022-10-18) <br> entire document | 1-21 |
| A | CN 115412936 A (ZHENGZHOU UNIVERSITY) 29 November 2022 (2022-11-29) <br> entire document | 1-21 |
| A | WO 2022250221 A1 (LG ELECTRONICS INC. et al.) 01 December 2022 (2022-12-01) <br> entire document | 1-21 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 March 2024** | **28 March 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/141580** |

| Patent document cited in search report | | | Publication date (day/month/year) | Patent family member(s) | Publication date (day/month/year) |
| --- | --- | --- | --- | --- | --- |
| CN | 114070370 | A | 18 February 2022 | None | |
| CN | 113727447 | A | 30 November 2021 | None | |
| CN | 115208448 | A | 18 October 2022 | None | |
| CN | 115412936 | A | 29 November 2022 | None | |
| WO | 2022250221 | A1 | 01 December 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211731367